# EUROPEAN PATENT APPLICATION

(11) **EP 2 810 705 A1**
(43) Date of publication of application: **10.12.2014**
(21) Application number: 13170562.6
(22) Date of filing: 05.06.2013
(51) Int. Cl.: B01J 19/24

(54) **Monolithic catalyst for tar reactor**

(71) Applicant: HALDOR TOPSOE A/S, 2800 Kgs. Lyngby (DK)
(72) Inventor: MADSEN, Jørgen, 3400 Hillerød (DK); LØGSTED-NIELSEN, Erik, 2400 Copenhagen (DK)

(57) **Abstract**

A monolithic catalyst for a tar reactor is adapted to be stacked inside the reactor by means of a central axis void and a supporting member of the reactor.

## Description

The present invention relates to a monolithic catalyst for a reactor. More specific it relates to a monolithic catalyst for a tar reactor for dirty gas.

Reactors working in a dirty environment are disposed to challenging conditions. At high temperatures, the internals are subject to aggressive gasses which may even contain dust and the like impurities.

Reactions are provided by the presence of catalysts in the reactor. Hence, also the catalysts are subject to the aggressive conditions. In tar reactors which are for instance used in gasification technologies, the high contents of impurities such as small particles and dust may build up on the catalysts and over time lower the performance of the catalysts and therefore the processes in the reactor.

A main parameter for the performance of catalysts is the active catalyst material, and thus the free surface of said active catalyst material. With a high surface to volume ratio of the catalyst a high performance of the reactions can be achieved in relative small size reactors. The same high surface to volume ratio however makes the catalysts sensitive to blocking, as they comprise a fine surface of valleys, ridges, and channels. A relative small amount of dust may therefore block a large surface of the catalyst.

Continuous operation of a tar reactor in a gasification plant at full capacity and with satisfactory decomposition and tar conversion in the tar reforming reactor is difficult in state of the art tar reactors due to the mentioned problems. Furthermore, catalyst loading and unloading of the tar reforming reactor has proven cumbersome and time consuming due to handling of the catalyst pellets which are used.

The related problems to be solved or at least improved are: Working conditions during unloading and loading of the catalyst in the tar reactor should be improved. Unloading and loading time of catalyst should be reduced. Downtime of the reactor due to the long catalyst replacement time should be reduced. Clean-up of the gas, i.e. tar and decomposition, should be improved. The operation time between stop of the process for service, cleaning or replacement should be prolonged.

It is therefore an object of the present invention to provide a monolithic catalyst for a tar reactor which solves the above mentioned problems and achieves the mentioned objectives.

It is a further object of the invention to provide a reactor comprising a plurality of monolithic catalysts which solves the above mentioned problems and achieves the mentioned objectives.

Accordingly the present invention provides a monolithic catalyst suited for a tar reactor and a reactor for tar reforming comprising a plurality of monolithic catalyst as described in the claims and further in the following description and drawings.

In a first aspect of the invention, a monolithic catalyst for a tar reactor is provided. As compared to a plurality of pellet catalysts, one single block, a monolith, with a large surface provided for the active catalyst material has the advantage of quick, precise and easy installation and un-loading in the reactor with the same active area as a plurality of pellet catalysts, which require a longer handling time. The monolithic catalyst comprises a cylindrical spiral wound metal sheet base which supports the catalyst. This design provides a large surface area of the sheet for the active catalyst material to be placed on, and at the same time the flow channels through the monolith are well defined and easy to clean, whilst also the production of the monolith is relative simple.

The monolith comprises a hollow center axis void which is adapted to receive a supporting member for supporting the monolith in the reactor. The monolith is adapted to be stacked inside the reactor one on top of another monolithic catalyst to form a stack of monolithic catalysts. Hence, when the plurality of monoliths are stacked one on top of the other, one supporting member can support all the monoliths in the stack.

In an embodiment of the invention, the monolithic catalyst may be made with a base for the catalyst which is corrugated metal sheet. This is a simple and effective way to achieve a base with a large surface are for supporting the catalyst, which then also will have a large effective area, and at the same time to provide channels or ducts in the monolith for the process gas of the reaction in the reactor to flow through. In an embodiment of the invention, the monolith may also comprise a flat metal sheet in connection to the corrugated metal sheet. When the metal sheets are wound together in the spiral to form a cylinder monolith, the metal layers of the cylinder will then be changing layers of flat and corrugated sheet material.

In a further embodiment of the invention, the outer wall of the monolithic catalyst is a metal cylinder. The metal cylinder may be formed by the metal sheet which also forms the inner part of the monolith, or it may be formed by a separate, thicker and stronger metal sheet to provide increased strength of the monolith which may be of importance when the monoliths are stacked one on top of each other.

Also the center axis void may be formed by a metal sheet or a pipe. In any case the center axis void is in such embodiments a bore or a metal inner cylinder. The metal inner cylinder may advantageous be co-axial with the axis of the monolithic catalyst. It may be advantageous to let the cylindrical spiral wound metal sheet base spiral out from said metal inner cylinder.

In a second aspect, the invention is a reactor for tar reforming comprising a plurality of monolithic catalyst, where the monolithic catalyst are of any of the above mentioned embodiments of the first aspect of the invention. The reactor comprises at least 3 of the described supporting members arranged in a circular array adapted to support at least 3 stacks of monolith. The supporting members may simply be 3 steel tubes or rods. When arranged in a circular array of a certain size, the stacks of monolith form a free central space in the reactor in the center of the circular array. Though this free space of course acquires an increase in reactor dimensions, it provides an area for inspection service and exchange of monoliths which may be advantageous for quick and easy service and thus a reduced down-time of the reactor.

In an embodiment of this second aspect of the invention, the reactor further comprises a plurality of intermediate sections which are disposed in between at least two of the monoliths in each stack. The intermediate sections are adapted to provide a gas tight connection of the intermediate sections to the monoliths on each side of the intermediate sections. These intermediate sections enable the monoliths to be dismantled, serviced and exchanged in a quick and easy fashion. They may be provided with snap closures at their ends to provide quick connection to the monoliths, in one embodiment even without the use of tools.

Further, in an embodiment of the invention, the intermediate sections comprise means for gas injection into the intermediate sections. This provides the possibility of appropriate addition of gas into the process stream in the reactor at any step in the catalyst stacks provided there is an intermediate section present at said step. In this way, the monolith catalysts which have to be interchanged at certain intervals can be kept simple and standard, without extra piping, whereas the intermediate sections which stays in the reactor can be provided with the necessary piping. It also enables the monoliths to be exchanged without dismantling the piping; they only need to be disconnected from the intermediate sections.

In a further embodiment, said intermediate sections further comprise piping or other means for impulse dust removal from the monoliths connected to the intermediate sections. The impulse dust removal can be the blowing of air or other gas into the intermediate sections and thus into the connected monoliths. This impulse results in the removal of at least a part of any particulate material such as dust, which may reside on the active surface of the catalyst of the monoliths, thereby reducing the performance of the catalyst. The means to provide the impulse may simply be a pipe, or it may also comprise nozzles directed towards the monolith. The impulse may be provided down-stream the process or it may be provided as a back-flush, a gas stream in the opposite direction of the process gas flow in the monolith stack.

In a further embodiment of the invention the intermediate sections comprise by-pass piping adapted to enable by-passing monoliths positioned between at least two intermediate sections. It can be advantageous to by-pass certain monoliths in a stack as they become blocked or degraded. For instance the top monoliths of a stack experience a faster reduction in performance and flow than the bottom ones. In that case it can be advantageous to by-pass the top monoliths to prolong the up-time of the reactor without considerable reduction in performance or increase in pressure loss on the process gas side.

The monolithic catalyst according to the invention will be further clarified in the following with reference to the drawings enclosed.

### Position numbers.

01. Monolithic catalyst.
02. Cylindrical spiral wound metal sheet base.
03. Hollow center axis void.
04. Metal cylinder outer wall.

Short description of the drawings:
Figure 1 is an isometric view of the monolithic catalyst of the invention.
Figure 2 is a top view of the monolithic catalyst of the invention.
Figure 3 is a side view of a cut through a diameter plane of the cylindrical monolithic catalyst of the invention.

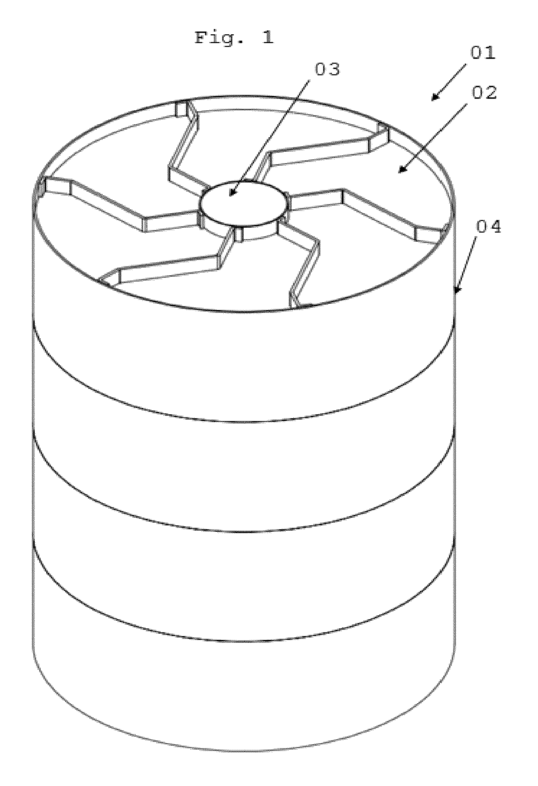

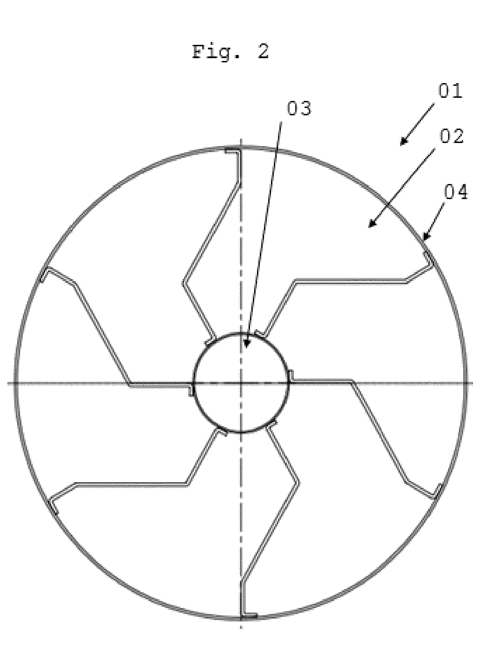

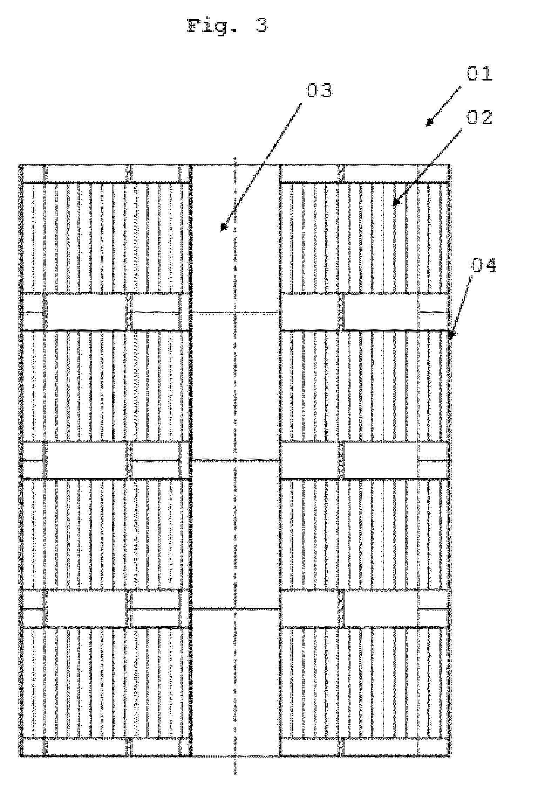

On figure 1 the monolithic catalyst 01 according to one embodiment of the invention is shown in an isometric view. As can be seen, it is cylindrical and comprises an inner hollow center axis void 03, which in this embodiment is a tube and an outer cylindrical metal sheet 04. In the embodiment shown, the monolithic catalyst is made of four separate cylinders which are assembled to one i.e. by means of bolts, welding thread or other known art methods. The cylindrical spiral wound metal sheet base 02 is disposed between the inner and the outer cylindrical wall of the monolith. Also, for the sake of centring the inner cylinder with the outer cylinder the monolith may comprise stabilizers which connect said two cylinders. Figure 2 shows the same monolithic catalyst in a top view, and on figure 3 a cut through the diameter of the monolith is seen, more clearly showing the four separate sections of the monolith which are assembled to one.

### Features of the invention

1. Monolithic catalyst for a tar reactor comprising a cylindrical spiral wound metal sheet base which supports the catalyst, wherein said monolith comprises a hollow center axis void adapted to receive a supporting member for supporting the monolith in the reactor, the monolith is adapted to be stacked inside the reactor one on top of another monolithic catalyst to form a stack of monolithic catalysts.
2. Monolithic catalyst according to feature 1, wherein the metal sheet is corrugated.
3. Monolithic catalyst according to any of the preceding features, wherein the monolithic catalyst comprises a metal cylinder outer wall.
4. Monolithic catalyst according to any of the preceding features, wherein said hollow center axis void is a bore.
5. Monolithic catalyst according to feature 4, wherein the bore is defined by a metal inner cylinder co-axial with the axis of the monolithic catalyst and the cylindrical spiral wound metal sheet base comprises metal sheets which spirals out from said metal inner cylinder.
6. Reactor for tar reforming comprising a plurality of monolithic catalyst, said monolithic catalysts comprising a cylindrical spiral wound metal sheet base which supports the catalyst, the monolith comprises a hollow center axis void adapted to receive a supporting member for supporting the monolith in the reactor, the monolith is adapted to be stacked inside the reactor one on top of another monolithic catalyst to form a stack of monolithic catalysts, wherein the reactor comprises at least 3 supporting members arranged in a circular array adapted to support at least 3 stacks of monolith, thereby forming a free central space in the reactor in the center of the circular array.
7. Reactor according to feature 6, wherein the metal sheet is corrugated.
8. Reactor according to feature 6 or 7, wherein the monolithic catalyst comprises a metal cylinder outer wall.
9. Reactor according to any of the features 6 - 8, wherein said hollow center axis void is a bore.
10. Reactor according to any of the features 6 - 9, , wherein the bore is defined by a metal inner cylinder co-axial with the axis of the monolithic catalyst and the cylindrical spiral wound metal sheet base comprises metal sheets which spirals out from said metal inner cylinder.
11. Reactor according to any of the features 6 - 10, wherein the reactor further comprises a plurality of intermediate sections in the stacks of monolithic catalysts positioned between at least two of the monoliths in each stack, wherein said intermediate sections comprises connection means for gas tight connection of the intermediate sections to the monoliths on each side of the intermediate sections.
12. Reactor according to feature 11, wherein said intermediate sections further comprise means for gas injection into the intermediate sections.
13. Reactor according to feature 11 or 12, wherein said intermediate sections further comprise means for impulse dust removal from the monoliths connected to the intermediate sections.
14. Reactor according to any of the features 11 - 13, wherein the connection means and the supporting members are adapted to allow for removal of the monoliths from the reactor without dismantling of any piping connected to the intermediate sections.
15. Reactor according to any of the features 11 - 14, wherein the intermediate sections comprise by-pass piping adapted to enable by-passing monoliths positioned between at least two intermediate sections.

### Example.

A tar reactor for dirty gas work at temperatures between 820°C and 930°C and at 1.5 bar(g). The existing tar reactor suffers mainly from:
Dust accumulation.
Time consuming cleaning and catalyst replacement.

The new design of the present invention with large monolithic catalyst instead of many small catalysts reduces considerably the dust accumulation as well as maintenance time.

## Claims

1. Monolithic catalyst for a tar reactor comprising a cylindrical spiral wound metal sheet base which supports the catalyst, wherein said monolith comprises a hollow center axis void adapted to receive a supporting member for supporting the monolith in the reactor, the monolith is adapted to be stacked inside the reactor one on top of another monolithic catalyst to form a stack of monolithic catalysts.

2. Monolithic catalyst according to claim 1, wherein the metal sheet is corrugated.

3. Monolithic catalyst according to any of the preceding claims, wherein the monolithic catalyst comprises a metal cylinder outer wall.

4. Monolithic catalyst according to any of the preceding claims, wherein said hollow center axis void is a bore.

5. Monolithic catalyst according to claim 4, wherein the bore is defined by a metal inner cylinder co-axial with the axis of the monolithic catalyst and the cylindrical spiral wound metal sheet base comprises metal sheets which spirals out from said metal inner cylinder.

6. Reactor for tar reforming comprising a plurality of monolithic catalyst, said monolithic catalysts comprising a cylindrical spiral wound metal sheet base which supports the catalyst, the monolith comprises a hollow center axis void adapted to receive a supporting member for supporting the monolith in the reactor, the monolith is adapted to be stacked inside the reactor one on top of another monolithic catalyst to form a stack of monolithic catalysts, wherein the reactor comprises at least 3 supporting members arranged in a circular array adapted to support at least 3 stacks of monolith, thereby forming a free central space in the reactor in the center of the circular array.

7. Reactor according to claim 6, wherein the metal sheet is corrugated.

8. Reactor according to claim 6 or 7, wherein the monolithic catalyst comprises a metal cylinder outer wall.

9. Reactor according to any of the claims 6 - 8, wherein said hollow center axis void is a bore.

10. Reactor according to any of the claims 6 - 9, , wherein the bore is defined by a metal inner cylinder co-axial with the axis of the monolithic catalyst and the cylindrical spiral wound metal sheet base comprises metal sheets which spirals out from said metal inner cylinder.

11. Reactor according to any of the claims 6 - 10, wherein the reactor further comprises a plurality of intermediate sections in the stacks of monolithic catalysts positioned between at least two of the monoliths in each stack, wherein said intermediate sections comprises connection means for gas tight connection of the intermediate sections to the monoliths on each side of the intermediate sections.

12. Reactor according to claim 11, wherein said intermediate sections further comprise means for gas injection into the intermediate sections.

13. Reactor according to claim 11 or 12, wherein said intermediate sections further comprise means for impulse dust removal from the monoliths connected to the intermediate sections.

14. Reactor according to any of the claims 11 - 13, wherein the connection means and the supporting members are adapted to allow for removal of the monoliths from the reactor without dismantling of any piping connected to the intermediate sections.

15. Reactor according to any of the claims 11 - 14, wherein the intermediate sections comprise by-pass piping adapted to enable by-passing monoliths positioned between at least two intermediate sections.
